# EUROPÄISCHE PATENTSCHRIFT

(11) **EP 1 758 757 B1**
(45) Veröffentlichungstag und Bekanntmachung des Hinweises auf die Patenterteilung: **17.03.2010**
(21) Anmeldenummer: 05748274.7
(22) Anmeldetag: 31.05.2005
(51) Int. Cl.: B60K 35/00

(54) **ANZEIGEVORRICHTUNG FÜR EIN KRAFTFAHRZEUG**
DISPLAY DEVICE FOR A MOTOR VEHICLE
DISPOSITIF D'AFFICHAGE POUR VEHICULE AUTOMOBILE

(30) Priorität: 11.06.2004 DE 102004028481
(43) Veröffentlichungstag der Anmeldung: 07.03.2007
(73) Patentinhaber: Volkswagen Aktiengesellschaft, 38436 Wolfsburg (DE)
(72) Erfinder: RAHE, Christian, 49477 Ibbenbühren (DE); FOTSO FOTSO, Serges, Herve, 65931 Frankfurt am Main (DE); LUX, Stefan, 38527 Meine (DE); GOSS, Stefan, 31137 Hildesheim (DE)
(86) Internationale Anmeldenummer: PCT/EP2005/005827
(87) Internationale Veröffentlichungsnummer: WO 2005/120880

(56) Entgegenhaltungen:
- EP-A- 0 771 686
- EP-A- 0 928 254
- EP-A- 1 080 976
- DE-A1- 10 212 600

## Beschreibung

Die Erfindung betrifft eine, insbesondere ein Kombiinstrument umfassende, Anzeigevorrichtung für ein Kraftfahrzeug.

Aus der DE 199 43 571 A1 ist ein Kombiinstrument mit einer auf der Rückseite eines Grundkörpers angeordneten starren Leiterplatte bekannt. Dieser Grundkörper wird auf der Vorderseite teilweise von einem Tragkörper abgedeckt, welcher gelenkig mit dem Grundkörper verbunden ist. Über die Vorderseite des Grundkörpers und des Tragkörpers erstreckt sich eine flexible Leiterplatte, welche einen definierten Winkel zu einem Randbereich der starren Leiterplatte umgelenkten Verbindungsbereich umfasst, der durch eine, z. B. Bügellötung, mit dieser Leiterplatte verbunden ist

Aus der DE 199 41 352 A1 ist ein Kombiinstrument mit einem Grundkörper bekannt, welcher in Anzeigefelder aufgeteilt ist, die mit unterschiedlichen Winkeln zueinander ausgerichtet sind. Auf der Vorderseite des Grundkörpers ist eine sich über mehrere Anzeigefelder erstreckende zusätzliche Leiterplatte angeordnet. Diese besteht aus starren Leiterplattenteilen, welche im Übergangsbereich der Anzeigefelder flexible Verbindungsbereiche mit Leiterbahnen aufweisen.

Aus der DE 198 19 822 A1 ist ein integriertes Kombiinstrument zum Anzeigen von unterschiedlichen Messdaten in einem Kraftfahrzeug bekannt, das mit analogen und digitalen Anzeigeinstrumenten bestückt ist. Das integrierte Kombiinstrument umfasst eine Einrichtung zur Ansteuerung der Anzeigeinstrumente und zum Durchführen einer oder mehrerer weiterer Funktionen der Karosseriezentralelektronik und Karosserieleistungselektronik und mindestens eine integrierte Sicherungseinrichtung für die Einrichtung.

Aus der DE 198 19 821 C1 ist ein Kombiinstrument zum Anzeigen von unterschiedlichen Messdaten in einem Kraftfahrzeug bekannt, das mit analogen und digitalen Anzeigeinstrumenten bestückt ist, wobei mechanische, optische und elektrische Bauteile der Anzeigeinstrumente auf einer Schaltungsträgereinrichtung angebracht sind und die elektronische Ansteuerung der Anzeigeinstrumente von einem auf der Schaltungsträgereinrichtung anbringbaren Elektronikmodul aus erfolgt. Die Schaltungsträgereinrichtung weist eine Verdrahtungsfolie auf, die zwischen einer rückseitigen Abdeckung und einer vorderseitigen Abdeckung einspannbar ist.

Aus der DE 198 19 393 A1 ist ebenfalls ein Kombiinstrument zum Anzeigen von unterschiedlichen Messdaten in einem Kraftfahrzeug bekannt, das mit analogen und digitalen Anzeigeinstrumenten bestückt ist, wobei mechanische, optische und elektrische Bauteile der Anzeigeinstrumente auf einer Trägerplatte gehaltert sind und die elektronische Ansteuerung der Anzeigeinstrumente von einem an der Trägerplatte anbringbaren Elektronikmodul aus erfolgt. Auf der Trägerplatte ist dabei jedoch eine Schaltungsträgereinrichtung zum Tragen der Verdrahtung der elektrischen Bauteile angebracht.

Eine weitere Anzeigevorrichtung für ein Kraftfahrzeug ist z.B. aus der EP 0 272 877 A2 bekannt.

EP-A-771686 zeigt eine Anzeigevorrichtung mit den Merkmalen des Oberbegriffs des Anspruch 1.

Es ist Aufgabe der Erfindung, eine, insbesondere ein Kombiinstrument umfassende, Anzeigevorrichtung für ein Kraftfahrzeug zu verbessern und insbesondere kostengünstiger zur produzieren.

Vorgenannte Aufgabe wird durch eine, insbesondere ein Kombiinstrument umfassende, Anzeigevorrichtung für ein Kraftfahrzeug gelöst, wobei die Anzeigevorrichtung eine Anzeigesteuerung zur Erzeugung eines ersten Bildsignals, einen Bildmultiplexer zur Kombination des ersten Bildsignals mit einem zweiten Bildsignal und zur Ausgabe eines (zumindest einen Anteil des ersten Bildsignals und/oder des zweiten Bildsignals umfassenden) Misch-Bildsignals sowie einen Monitor zur Darstellung eines Bildes in Abhängigkeit des Misch-Bildsignals aufweist. Die Anzeigesteuerung und der Bildmultiplexer sind vorteilhafterweise in einem Gehäuse, insbesondere in einem Gehäuse zur Aufnahme des Monitors sowie z.B. einer elektromechanischen Anzeige, angeordnet.

In weiterhin vorteilhafter Ausgestaltung der Erfindung ist das erste Bildsignal mittels des Bildmultiplexers gegenüber dem zweiten Bildsignal priorisierbar. Das erste Bildsignal ist dabei mittels des Bildmultiplexers gegenüber dem zweiten Bildsignal vorteilhafterweise derart priorisierbar, dass das Misch-Bildsignal derart gebildet wird, dass auf einem Bereich des Monitors nur dann ein dem zweiten Bildsignal entsprechendes Bild abgebildet wird, wenn das erste Bildsignal für diesen Bereich keinen Bildanteil aufweist. Dazu kann der Monitor z.B. vorteilhafterweise in, insbesondere virtuelle, Segmente unterteilt werden. In diesem Fall wird das Misch-Bildsignal in weiterhin vorteilhafter Ausgestaltung der Erfindung derart gebildet, dass in einem, insbesondere virtuellen, Segment des Monitors nur dann ein dem zweiten Bildsignal entsprechendes Bild abgebildet wird, wenn das erste Bildsignal für dieses, insbesondere virtuelle, Segment keinen Bildanteil aufweist.

In weiterhin vorteilhafter Ausgestaltung der Erfindung umfasst die Anzeigevorrichtung eine Bild-Eingangsschnittstelle, z.B. eine Videoschnittstelle, insbesondere eine DVI-Schnittstelle (Digital Video Interface), bzw. eine RGB-Schnittstelle oder eine LVDS-Datenschnittstelle, zum Einlesen des zweiten Bildsignals.

Gemäss der Erfindung umfasst die Anzeigevorrichtung eine Steuersignal-Schnittstelle, z.B..eine CAN-Bus-Schnittstelle, zum Einlesen eines Steuersignals.

Wobei das erste Bildsignal mittels der Anzeigesteuerung in Abhängigkeit des Steuersignals erzeugbar ist.

In weiterhin vorteilhafter Ausgestaltung der Erfindung umfasst die Anzeigevorrichtung eine elektromechanische Anzeige, die in weiterhin vorteilhafter Ausgestaltung der Erfindung mittels der Anzeigesteuerung in Abhängigkeit des Steuersignals ansteuerbar ist.

Vorgenannte Aufgabe wird - insbesondere in Verbindung mit vorgenannten Merkmalen - zudem durch eine, insbesondere ein Kombiinstrument aufweisende, Anzeigevorrichtung für ein Kraftfahrzeug gelöst, wobei die Anzeigevorrichtung eine Anzeigesteuerung zur Erzeugung eines ersten Bildsignals und eine Bild-Eingangsschnittstelle zum Einlesen eines zweiten Bildsignals umfasst.

Vorgenannte Aufgabe wird zudem durch ein eine Anzeigevorrichtung - insbesondere mit vorgenannten Merkmalen - umfassendes Kraftfahrzeug gelöst. In vorteilhafter Ausgestaltung der Erfindung umfasst das Steuersignal dabei die Geschwindigkeit des Kraftfahrzeugs und/oder die Drehzahl eines Motors des Kraftfahrzeugs.

In weiterhin vorteilhafter Ausgestaltung der Erfindung umfasst das Steuersignal (u. a.) eine Temperatur eines Motorkühlmittels, einen Öldruck des Kraftfahrzeugs, einen Füllzustand eines Tanks des Kraftfahrzeugs, einen aktuellen und/oder einen durchschnittlichen Kraftstoffverbrauch des Kraftfahrzeugs, einen zurückgelegten Weg, eine durchschnittliche Reisegeschwindigkeit, ein ABS-Warnsignal, einen Schließzustand einer Tür des Kraftfahrzeugs, einen Zustand einer Parkbremse, einen Zustand eines Sicherheitsgurtes, einen Zustand eines Airbags und/oder ein Signal eines Fahrassistenzsystems.

In weiterhin vorteilhafter Ausgestaltung der Erfindung umfasst das Kraftfahrzeug ein Infotainmentsystem mit einer Bild-Ausgangsschnittstelle, wobei die Bild-Ausgangsschnittstelle datentechnisch mit der Bild-Eingangsschnittstelle verbunden ist. Dabei ist das zweite Bildsignal vorteilhafterweise mittels des Infotainmentsystems erzeugbar.

in weiterhin vorteilhafter Ausgestaltung der Erfindung ist vorgesehen, dass das zweite Bildsignal ein Bildsignal zur Darstellung von Informationen eines Navigationssystems, eines Radios, eines DVD-Spielers, eines CD-Spielers, eines Telefons, eines TV-Moduls und/oder einer Klimaanlage umfasst oder (z.B. je nach Wunsch eines Bedieners) umfassen kann.

In weiterhin vorteilhafter Ausgestaltung der Erfindung umfasst das Kraftfahrzeug eine datentechnisch mit der Bild-Eingangsschnittstelle oder dem Infotainmentsystem verbundene Rückfahrkamera, wobei das zweite Bildsignal ein von der Rückfahrkamera erzeugbares Videosignal umfasst oder (z.B. je nach Wunsch eines Bedieners) umfassen kann.

Ein Steuersignal im Sinne der Erfindung kann verschiedene parallel übertragene Steuersignalanteile, wie etwa die Geschwindigkeit des Kraftfahrzeugs, die Drehzahl des Motors des Kraftfahrzeugs, die Temperatur des Motorkühlmittels, den Öldruck des Kraftfahrzeugs, den Füllzustand des Tanks des Kraftfahrzeugs, den aktuellen und/oder durchschnittlichen Kraftstoffverbrauch des Kraftfahrzeugs, den zurückgelegten Weg, die durchschnittliche Reisegeschwindigkeit, das ABS-Warnsignal, den Schließzustand einer Tür des Kraftfahrzeugs, den Zustand der Parkbremse, den Zustand des Sicherheitsgurtes, den Zustand des Airbags und/oder das Signal eines Fahrassistenzsystems umfassen. Verschiedene Steuersignalanteile können auch seriell z.B. gemäß dem CAN-Bus-Protokoll übertragen werden.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: eine Innenansicht eines Kraftfahrzeuges,
- Fig. 2: eine Prinzipdarstellung eines Kraftfahrzeuges mit einer Anzeigevorrichtung,
- Fig. 3: eine Ansicht der Anzeigevorrichtung gemäß Fig. 2
- Fig. 4: eine weitere Ansicht der Anzeigevorrichtung gemäß Fig. 2 und
- Fig. 5: eine weitere Ansicht der Anzeigevorrichtung gemäß Fig. 2.

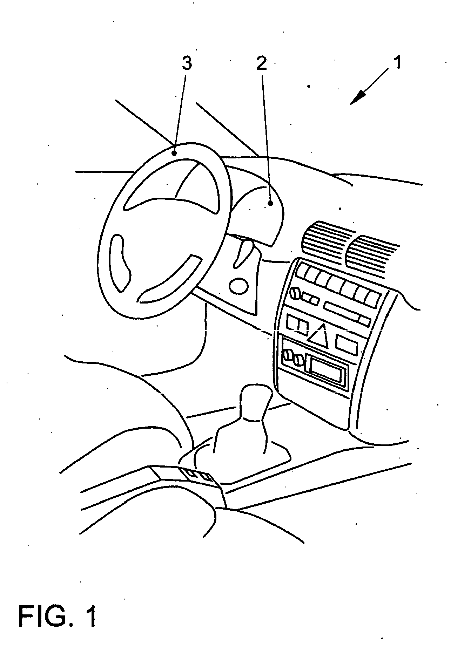

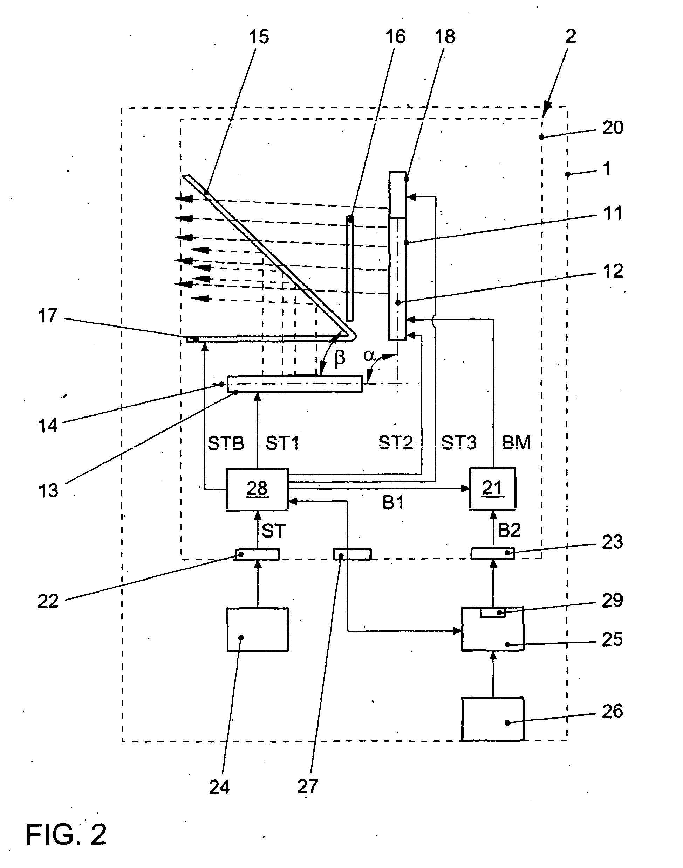

Fig. 1 zeigt Innenansicht eines Kraftfahrzeuges 1 mit einer hinter einem Lenkrad 3 angeordneten Anzeigevorrichtung 2. Fig. 2 zeigt eine Prinzipdarstellung des Kraftfahrzeuges 1 mit der Anzeigevorrichtung 2. Die Anzeigevorrichtung 2 weist einen LCD-Monitor 11 zur Darstellung eines Bildes in Abhängigkeit eines Misch-Bildsignals BM sowie eine, z.B. analoge Zeiger aufweisende, elektromechanische Anzeige 13 auf, die mittels einer Anzeigesteuerung 28 in Abhängigkeit eines -z.B. von einer Steuerung 24 des Kraftfahrzeugs erzeugbaren und über eine Steuersignal-Schnittstelle 22, z.B. eine CAN-Bus-Schnittstelle, einlesbaren - Steuersignals ST ansteuerbar ist. Dazu erzeugt die Anzeigesteuerung 28 ein erstes Anzeige-Steuersignal ST1, das z.B. eine Spannung zum Bewegen eines analogen Zeigers zur Anzeige der Geschwindigkeit des Kraftfahrzeugs oder eine Spannung zum Bewegen eines analogen Zeigers zur Anzeige der Drehzahl eines Motors des Kraftfahrzeugs sein kann. Der LCD-Monitor 11 ist mittels eines von der Anzeigesteuerung 28 erzeugbaren zweiten Steuersignals ST2 eiri- bzw. ausschaltbar.

Das Steuersignal ST umfasst in vorteilhafter Ausgestaltung die Geschwindigkeit des Kraftfahrzeugs, die Drehzahl des Motors des Kraftfahrzeugs, eine Temperatur eines Motorkühlmittels, einen Öldruck des Kraftfahrzeugs, einen Füllzustand eines Tanks des Kraftfahrzeugs, eine aktuelle und/oder einen durchschnittlichen Kraftstoffverbrauch des Kraftfahrzeugs, einen zurückgelegten Weg, eine durchschnittliche Reisegeschwindigkeit, ein ABS-Warnsignal, einen Schließzustand einer Tür des Kraftfahrzeugs, einen Zustand einer Parkbremse, einen Zustand eines Sicherheitsgurtes, einen Zustand eines Airbags und/oder ein Signal eines Fahrassistenzsystems.

Die Anzeigevorrichtung 2 weist weiterhin eine Warnanzeige 18 zur optischen Warnung auf. Dabei können z.B. Warnungen in Bezug auf eine zu hohe Temperatur des Motorkühlmittels, einen zu geringen Öldruck des Kraftfahrzeugs, einen Defekt des ABS, eine nicht geschlossene Tür des Kraftfahrzeugs, eine nicht vollständig gelöste Parkbremse, einen nicht geschlossenen Sicherheitsgurt oder einen ausgeschalteten Airbag dargestellt werden. Die einzelnen Teile der Warnanzeige 18 sind mittels eines von der Anzeigesteuerung 28 erzeugbaren dritten Steuersignals ST3 ein- bzw. ausschaltbar.

Die Mittelachsen 12 und 14 des LCD-Monitors 11 und der elektromechanischen Anzeige 13 sind vorteilhafterweise in einem Winkel α von 90° zueinander angeordnet. In einem Winkel β von 45° von der elektromechanischen Anzeige 13 ist eine Kombinationseinrichtung vorgesehen. Im vorliegenden Ausführungsbeispiel ist dies ein planer semitransparenter Spiegel 15, der für das abbildende Licht des LCD-Monitors 11 durchlässig ausgebildet ist, so dass ein Betrachter das Anzeigebild des LCD-Monitors 11 und der Warnanzeige 18 direkt wahrnimmt. Das abbildende Licht der elektromechanischen Anzeige 13 wird von dem semitransparenten Spiegel 15 reflektiert, so dass es für einen Betrachter als ein dem Monotor 11 vorgelagertes virtuelles Bild 16 erscheint. Im Ausführungsbeispiel ist oberhalb der elektromechanischen Anzeige 13 eine Blende 17 vorgesehen, mittels derer Teile der elektromechanischen Anzeige 13 in Abhängigkeit eines Blendensteuersignals STB abgedeckt werden können.

Mittels der Anzeigesteuerung 28 ist ein erstes Bildsignal B1, z.B. zur Darstellung der Temperatur des Motorkühlmittels, des Öldrucks des Kraftfahrzeugs, des Füllzustands des Tanks des Kraftfahrzeugs, des aktuellen und/oder des durchschnittlichen Kraftstoffverbrauchs des Kraftfahrzeugs, des zurückgelegten Wegs, der durchschnittlichen Reisegeschwindigkeit, des ABS-Warnsignals, des Schließzustands der Türen des Kraftfahrzeugs, des Zustands der Parkbremse und/oder der Anzeigen eines Fahrassistenzsystems in Abhängigkeit des Steuersignals ST erzeugbar.

Die Anzeigevorrichtung 2 umfasst weiterhin einen Bildmultiplexer 21 zur Kombination des ersten Bildsignals B1 mit einem zweiten über eine als RGB-Schnittstelle ausgestaltete Bild-Eingangsschnittstelle 23 einlesbaren Bildsignal B2 und zur Ausgabe des Misch-Bildsignals BM. Die Anzeigesteuerung 28 und der Bildmultiplexer 21 sind vorteilhafterweise in einem Gehäuse 20 zur Aufnahme des LCD-Monitors 11 und der elektromechanischen Anzeige 13 angeordnet.

Vorteilhafterweise ist das erste Bildsignal B1 mittels des Bildmultiplexers 21 gegenüber dem zweiten Bildsignal B2 priorisierbar. Das erste Bildsignal B1 ist dabei mittels des Bildmultiplexers gegenüber dem zweiten Bildsignal B2 vorteilhafterweise derart priorisierbar, dass das Misch-Bildsignal BM derart gebildet wird, dass auf einem Bereich des LCD-Monitors 11 nur dann ein dem zweiten Bildsignal B2 entsprechendes Bild abgebildet wird, wenn das erste Bildsignal B1 für diesen Bereich keinen Bildanteil aufweist. Dazu kann der LCD-Monitor 11 z.B. vorteilhafterweise in, insbesondere virtuelle, Segmente unterteilt werden. In diesem Fall wird das Misch-Bildsignal BM in vorteilhafter Ausgestaltung derart gebildet, dass in einem, insbesondere virtuellen, Segment des LCD-Monitors 11 nur dann ein dem zweiten Bildsignal B2 entsprechendes Bild abgebildet wird, wenn das erste Bildsignal B1 für dieses, insbesondere virtuelle, Segment keinen Bildanteil aufweist.

Das Kraftfahrzeug 1 weist zudem ein Infotainmentsystem 25 auf, mittels dessen das zweite Bildsignal B2 über eine datentechnisch mit der Bild-Eingangsschnittstelle 23 verbundene Bild-Ausgangsschnittstelle 29 ausgegeben wird. Es kann vorgesehen sein, dass das zweite Bildsignal B2 ein Bildsignal zur Darstellung von Informationen eines z.B. dem Infotainmentsystem 25 zugeordneten Navigationssystems, eines z.B. dem Infotainmentsystem 25 zugeordneten Radios, eines z.B. dem Infotainmentsystem 25 zugeordneten DVD-Spielers, eines z.B. dem Infotainmentsystem 25 zugeordneten CD-Spielers, eines z.B. dem Infotainmentsystem 25 zugeordneten Telefons, eines z.B. dem Infotainmentsystem 25 zugeordneten TV-Moduls und/oder einer z.B. dem Infotainmentsystem 25 zugeordneten Klimaanlage umfasst oder (z.B. je nach Wunsch eines Bedieners) umfassen kann.

In vorteilhafter Ausgestaltung umfasst das Kraftfahrzeug 1 eine datentechnisch mit der Bild-Eingangsschnittstelle 23 oder dem Infotainmentsystem 25 verbundene Rückfahrkamera 26, wobei das zweite Bildsignal B2 ein von der Rückfahrkamera 26 erzeugbares Videosignal umfasst oder (z.B. je nach Wunsch eines Bedieners) umfassen kann.

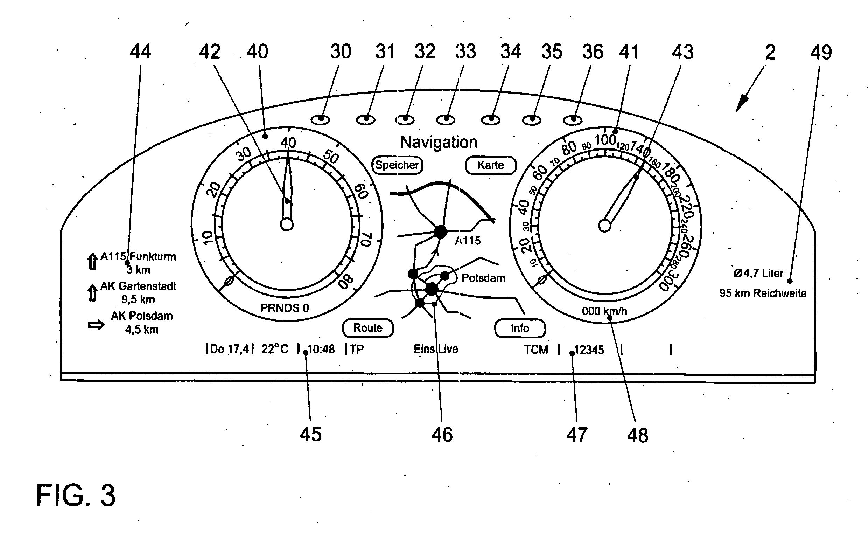

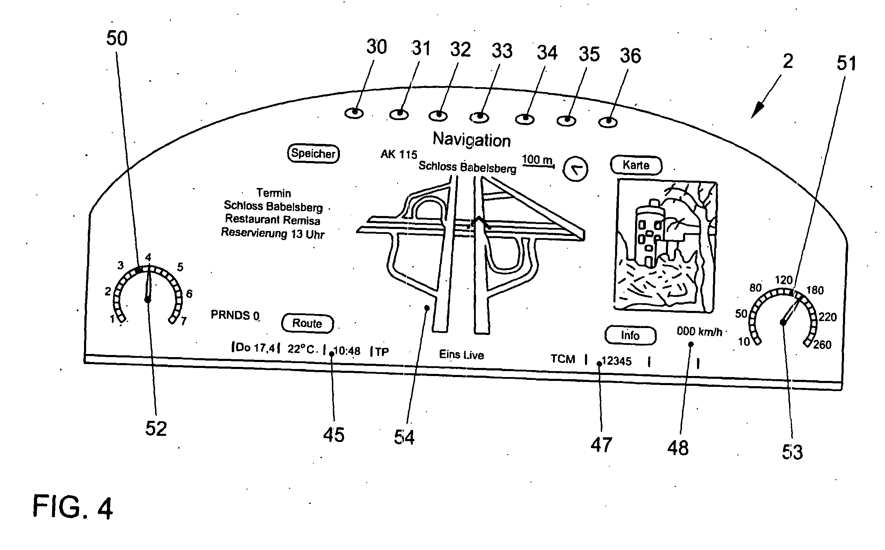

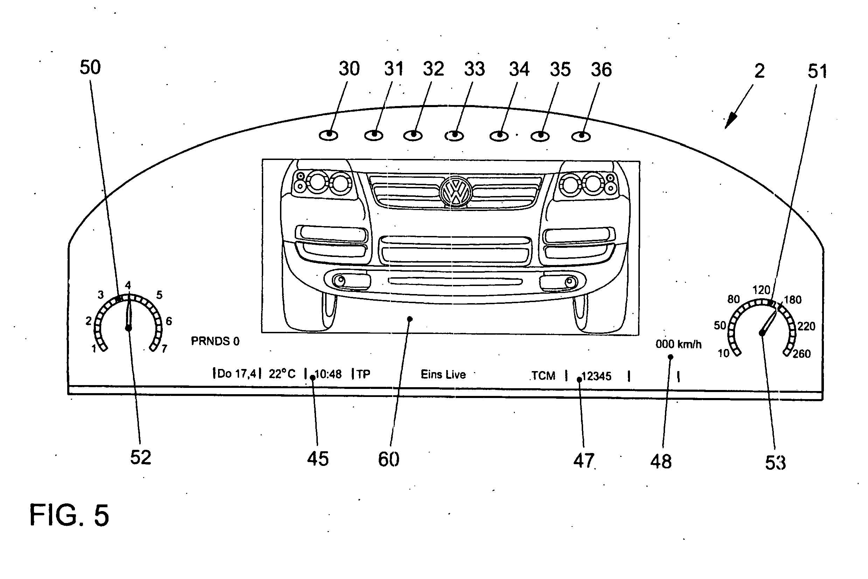

Fig. 3, Fig. 4 und Fig. 5 zeigen ein Ausführungsbeispiel für eine Ansicht der Anzeigevorrichtung 2 gemäß Fig. 2. Dabei bezeichnen Bezugszeichen 30, 31, 32, 33, 34, 35 und 36 einzelne Teile der Warnanzeige 18, die mittels des von der Anzeigesteuerung 28 erzeugbaren dritten Steuersignals ST3 ein- bzw. ausschaltbar sind. Bezugszeichen 42, 43, 52 und 53 bezeichnen auf der elektromechanischen Anzeige 13 implementierte (körperliche) Zeiger. Dabei sind die Zeiger 52 und 53 in der Ansicht gemäß Fig. 3 und die Zeiger 42 und 43 in der Ansicht gemäß Fig. 4 und Fig. 5 von der Blende 17 abgedeckt. Bezugszeichen 40, 41, 50 und 51 bezeichnen den Zeigern 42, 43, 52 und 53 zugeordnete Skalen. Die Skalen 40, 41, 50 und 51 können als Teil der elektromechanischen Anzeige 13 implementiert sein. Im vorliegenden Ausführungsbeispiel werden die Skalen als Teil des ersten Bildsignals B1 auf dem LCD-Monitor 11. dargestellt.

Bezugszeichen 45 bezeichnet ein Segment, in dem in den Ansichten gemäß Fig. 3, Fig. 4 und Fig. 5 eine Uhrzeit dargestellt wird. Bezugszeichen 47 bezeichnet ein Segment, in dem in den Ansichten gemäß Fig. 3, Fig. 4 und Fig. 5 ein Kilometerzähler dargestellt wird, und Bezugszeichen 48 bezeichnet ein Segment, in dem in den Ansichten gemäß Fig. 3, Fig. 4 und Fig. 5 ein Tages-Kilometerzähler dargestellt wird. Bezugszeichen 49 bezeichnet ein Segment, in dem in der Ansicht gemäß Fig. 3 ein durchschnittlicher Kraftstoffverbrauch und eine Reichweite dargestellt werden. Die Uhrzeit, der Kilometerzähler, der Tages-Kilometerzähler, der durchschnittliche Kraftstoffverbrauch und die Reichweite sind Bestandteile des ersten Bildsignals B1.

Bezugszeichen 44 und 46 in der Ansicht gemäß Fig. 3 und Bezugszeichen 54 in der Ansicht gemäß Fig. 4 bezeichnen auf dem LCD-Monitor 11 dargestellte Navigationsinformationen, die Bestandteile des zweiten Bildsignals B2 sind. Damit eine der Ansicht gemäß Fig. 4 entsprechende Darstellung von dem Bildmultiplexer 21 zugelassen wird, wird das erste Bildsignal B1 von der Anzeigesteuerung 28 entsprechend eingeschränkt. Dazu wiederum ist ein Datenaustausch zwischen der Anzeigesteuerung 28 und dem Infotainmentsystem 25 über eine Schnittstelle 27 vorgesehen. So kann das Infotainmentsystem 25 der Anzeigesteuerung 28 anzeigen, welche Segmente auf dem LCD-Monitor 11 von dem Infotainmentsystem 25 genutzt werden sollen. Die Anzeigesteuerung 28 entscheidet dann, ob diese Segmente (in dem ersten Bildsignal B1) frei gegeben werden. Entsprechendes gilt auch für die Darstellung eines dem zweiten Bildsignal B2 zugeordneten Bildes 60 einer Rückfahrkamera 26, wie es Fig. 5 zeigt.

Die Elemente in den Figuren sind unter Berücksichtigung von Einfachheit und Klarheit und nicht notwendigerweise maßstabsgetreu gezeichnet. So sind z.B. die Größenordnungen einiger Elemente gegenüber anderen Elementen übertrieben dargestellt, um das Verständnis der Ausführungsbeispiele der vorliegenden Erfindung zu verbessern.

### Bezugszeichenliste

- 1: Kraftfahrzeug
- 2: Anzeigevorrichtung
- 3: Lenkrad
- 11: LCD-Monitor
- 12, 14: Mittelachse
- 13: elektromechanische Anzeige
- 15: semitransparenter Spiegel
- 16: virtuelles Bild
- 17: Blende
- 18: Warnanzeige
- 20: Gehäuse
- 21: Bildmultiplexer
- 22: Steuersignal-Schnittstelle
- 23: Bild-Eingangsschnittstelle
- 24: Steuerung
- 25: Infotainmentsystem
- 26: Rückfahrkamera
- 27: Schnittstelle
- 28: Anzeigesteuerung
- 29: Bild-Ausgangsschnittstelle
- 30, 31, 32, 33, 34, 35, 36: Teile einer Warnanzeige
- 40,41,50,51: Skala
- 42, 43, 52, 53: Zeiger
- 44, 45, 47, 48, 49: Segment
- 46, 54: Navigationsinformationen
- 60: Bild

- BM: Misch-Bildsignal
- B1: erstes Bildsignal
- B2: zweites Bildsignal
- ST: Steuersignal
- STB: Blendensteuersignal
- ST1: erstes Anzeige-Steuersignal
- ST2: zweites Anzeige-Steuersignal
- ST3: drittes Anzeige-Steuersignal
- α,β: Winkel

## Patentansprüche

1. Anzeigevorrichtung (2) für ein Kraftfahrzeug (1), wobei die Anzeigevorrichtung (2) eine Anzeigesteuerung (28) zur Erzeugung eines ersten Bildsignals (B1) umfasst, wobei die Anzeigevorrichtung (2) einen Bildmultiplexer (21) zur Kombination des ersten Bildsignals (B1) mit einem zweiten Bildsignal (B2) und zur Ausgabe eines Misch-Bildsignals (BM), einen Monitor (11) zur Darstellung eines Bildes in Abhängigkeit des Misch-Bildsignals (BM) sowie eine Bild-Eingangsschnlttstelle (23) zum Einlesen des zweiten Bildsignals (B2) aufweist,
**dadurch gekennzeichnet, dass**
die Anzeigevorrichtung (2) eine Steuersignal-Schnittstelle (22) zum Einlesen eines Steuersignals (ST) umfasst, wobei das erste Bildsignal (B1) mittels der Anzeigesteuerung (28) in Abhängigkeit des Steuersignals (ST) erzeugbar ist.

2. Anzeigevorrichtung (2) nach Anspruch 1, **dadurch gekennzeichnet, dass** das erste Bildsignal (B1) mittels des Bildmultiplexers (21) gegenüber dem zweiten Bildsignal (B2) priorisierbar ist.

3. Anzeigevorrichtung (2) nach Anspruch 1 oder 2, **dadurch gekennzeichnet, dass** die Bild-Eingangsschnittstelle (23) eine Videoschnittstelle ist.

4. Anzeigevorrichtung (2) nach Anspruch 1 oder 2, **dadurch gekennzeichnet, dass** die Bild-Eingangsschnittstelle (23) eine RGB-Schnittstelle, eine LVDS-Schnittstelle oder eine DVI-Schnittstelleist.

5. Anzeigevorrichtung (2) nach einem der vorhergehenden Ansprüche, **dadurch gekennzeichnet, dass** sie eine elektromechanische Anzeige (13) umfasst.

6. Anzeigevorrichtung (2) nach Anspruch 5, **dadurch gekennzeichnet, dass** die elektromechanische Anzeige (13) mittels der Anzeigesteuerung (28) in Abhängigkeit des Steuersignals (ST) ansteuerbar ist.

7. Kraftfahrzeug (1), **dadurch gekennzeichnet, dass** es eine Anzeigevorrichtung (2) nach einem der vorhergehenden Ansprüche umfasst.

8. Kraftfahrzeug (1) nach Anspruch 7, **dadurch gekennzeichnet, dass** das Steuersignal (ST) die Geschwindigkeit des Kraftfahrzeugs (1) oder die Drehzahl eines Motors des Kraftfahrzeugs (1) umfasst.

9. Kraftfahrzeug (1) nach Anspruch 7 oder 8, **dadurch gekennzeichnet, dass** das Steuersignal (ST) eine Temperatur eines Motorkühlmittels, einen Öldruck des Kraftfahrzeugs (1), einen Füllzustand eines Tanks des Kraftfahrzeugs (1), einen aktuellen oder einen durchschnittlichen Kraftstoffverbrauch des Kraftfahrzeugs (1), einen zurückgelegten Weg, eine durchschnittliche Reisegeschwindigkeit, ein ABS-Wamsignal, einen Schließzustand einer Tür des Kraftfahrzeugs (1), einen Zustand einer Parkbremse, einen Zustand eines Sicherheitsgurtes, einen Zustand eines Airbags oder ein Signal eines Fahrassistenzsystems umfasst.

10. Kraftfahrzeug (1) nach Anspruch 7, 8 oder 9, **dadurch gekennzeichnet, dass** es ein Infotainmentsystem (25) mit einer Bild-Ausgangsschnittstelle (29) umfasst, wobei die Bild-Ausgangsschnittstelle datentechnisch mit der Bild-Eingangsschnittstelle (23) verbunden ist.

11. Kraftfahrzeug (1) nach Anspruch 10, **dadurch gekennzeichnet, dass** das zweite Bildsignal (B2) mittels des Infotainmentsystems (25) erzeugbar ist.

12. Kraftfahrzeug (1) nach einem der Ansprüche 7 bis 11, **dadurch gekennzeichnet, dass** das zweite Bildsignal (B2) ein Bildsignal zur Darstellung von Informationen eines Navigationssystems, eines Radios, eines DVD-Spielers, eines CD-Spielers, eines Telefons, eines TV-Moduls oder einer Klimaanlage umfasst oder umfassen kann.

13. Kraftfahrzeug (1) nach einem der Ansprüche 7 bis 12, **dadurch gekennzeichnet, dass** es eine datentechnisch mit der Bild-Eingangsschnittstelle (23) oder dem Infotainmentsystem (25) verbundene Rückfahrkamera (26) umfasst, wobei das zweite Bildsignal (B2) ein von der Rückfahrkamera (26) erzeugbares Videosignal umfasst oder umfassen kann.

## Claims

1. Display apparatus (2) for a motor vehicle (1), wherein the display apparatus (2) has a display controller (28) for producing a first image signal (B1), wherein the display device (2) has an image multiplexer (21) for combination of the first image signal (B1) with a second image signal (B2) and for outputting a mixed image signal (BM), a monitor (11) for displaying an image as a function of the mixed image signal (BM), and an image input interface (23) for reading in the second image signal (B2),
**characterized in that**
the display apparatus (2) has a control signal interface (22) for reading in a control signal (ST), wherein the first image signal (B1) can be produced by means of the display controller (28) as a function of the control signal (ST).

2. Display apparatus (2) according to Claim 1, **characterized in that** the first image signal (B1) can be prioritized with respect to the second image signal (B2) by means of the image multiplexer (21).

3. Display apparatus (2) according to Claim 1 or 2, **characterized in that** the image input interface (23) is a video interface.

4. Display apparatus (2) according to Claim 1 or 2, **characterized in that** the image input interface (23) is an RGB interface, and LVDS interface or a DVI interface.

5. Display apparatus (2) according to one of the preceding claims, **characterized in that** the display apparatus (2) has an electromechanical display (13).

6. Display apparatus (2) according to Claim 5, **characterized in that** the electromechanical display (13) can be operated by means of the display controller (28) as a function of the control signal (ST).

7. Motor vehicle (1), **characterized in that** the motor vehicle has a display apparatus (2) according to one of the preceding claims.

8. Motor vehicle (1) according to Claim 7, **characterized in that** the control signal (ST) comprises the speed of the motor vehicle (1) or the rotation speed of the engine or motor of the motor vehicle (1).

9. Motor vehicle (1) according to Claim 7 or 8, **characterized in that** the control signal (ST) comprises a temperature of an engine or motor coolant, an oil pressure in the motor vehicle (1), a filling level of a tank in the motor vehicle (1), a current or an average fuel consumption of the motor vehicle (1), a distance travelled, an average speed of travel, an ABS warning signal, a closing state of a door of the motor vehicle (1), a state of a parking brake, a state of a safety belt, a state of an air bag, or a signal from a driving assistance system.

10. Motor vehicle (1) according to Claim 7, 8 or 9, **characterized in that** the motor vehicle has an infotainment system (25) with an image output interface (29), wherein the image output interface is connected for data transmission purposes to the image input interface (23).

11. Motor vehicle (1) according to Claim 10, **characterized in that** the second image signal (B2) can be produced by means of the infotainment system (25).

12. Motor vehicle (1) according to one of Claims 7 to 11, **characterized in that** the second image signal (B2) comprises or may comprise an image signal for displaying information from a navigation system, a radio, a DVD player, a CD player, a telephone, a TV module or an air-conditioning system.

13. Motor vehicle (1) according to one of Claims 7 to 12, **characterized in that** the motor vehicle has a rear-view camera (26) which is connected for data transmission purposes to the image input interface (23) or to the infotainment system (25), wherein the second image signal (B2) comprises or may comprise a video signal which can be produced by the rear-view camera (26).

## Revendications

1. Dispositif d'affichage (2) pour un véhicule automobile (1), le dispositif d'affichage (2) comprenant une commande d'affichage (28) pour générer un premier signal d'image (B1), le dispositif d'affichage (2) présentant un multiplexeur d'image (21) pour combiner le premier signal d'image (B1) avec un deuxième signal d'image (B2) et pour délivrer un signal d'image mélangé (BM), un moniteur (11) pour représenter une image en fonction du signal d'image mélangé (BM) ainsi qu'une interface d'entrée d'image (23) pour lire le deuxième signal d'image (B2), **caractérisé en ce que** le dispositif d'affichage (2) comprend une interface de signal de commande (22) destinée à la lecture d'un signal de commande (ST), le premier signal d'image (B1) pouvant être généré au moyen de la commande d'affichage (28) en fonction du signal de commande (ST).

2. Dispositif d'affichage (2) selon la revendication 1, **caractérisé en ce que** la priorité peut être accordée au premier signal d'image (B1) par rapport au deuxième signal d'image (B2) au moyen du multiplexeur d'image (21).

3. Dispositif d'affichage (2) selon la revendication 1 ou 2, **caractérisé en ce que** l'interface d'entrée d'image (23) est une interface vidéo.

4. Dispositif d'affichage (2) selon la revendication 1 ou 2, **caractérisé en ce que** l'interface d'entrée d'image (23) est une interface RVB, une interface LVDS ou une interface DVI.

5. Dispositif d'affichage (2) selon l'une des revendications précédentes, **caractérisé en ce qu'**il comprend un indicateur électromécanique (13).

6. Dispositif d'affichage (2) selon la revendication 5, **caractérisé en ce que** l'indicateur électromécanique (13) peut être commandé au moyen de la commande d'affichage (28) en fonction du signal de commande (ST).

7. Véhicule automobile (1), **caractérisé en ce qu'**il comprend un dispositif d'affichage (2) selon l'une des revendications précédentes.

8. Véhicule automobile (1) selon la revendication 7, **caractérisé en ce que** le signal de commande (ST) comprend la vitesse du véhicule automobile (1) ou la vitesse de rotation d'un moteur du véhicule automobile (1).

9. Véhicule automobile (1) selon la revendication 7 ou 8, **caractérisé en ce que** le signal de commande (ST) comprend une température d'un fluide de refroidissement du moteur, une pression d'huile du véhicule automobile (1), un niveau de remplissage d'un réservoir du véhicule automobile (1), une consommation de carburant actuelle ou moyenne du véhicule automobile (1), un trajet parcouru, une vitesse de déplacement moyenne, un signal d'alerte ABS, un état de fermeture d'une portière du véhicule automobile (1), un état d'un frein de stationnement, un état d'une ceinture de sécurité, un état d'un coussin gonflable de sécurité ou un signal d'un système d'assistance au conducteur.

10. Véhicule automobile (1) selon la revendication 7, 8 ou 9, **caractérisé en ce qu'**il comprend un système d'infodivertissement (25) muni d'une interface de sortie d'image (29), l'interface de sortie d'image étant reliée informatiquement avec l'interface d'entrée d'image (23).

11. Véhicule automobile (1) selon la revendication 10, **caractérisé en ce que** le deuxième signal d'image (B2) peut être généré au moyen du système d'infodivertissement (25).

12. Véhicule automobile (1) selon l'une des revendications 7 à 11, **caractérisé en ce que** le deuxième signal d'image (B2) inclut ou peut inclure un signal d'image destiné à représenter les informations d'un système de navigation, d'une radio, d'un lecteur de DVD, d'un lecteur de CD, d'un téléphone, d'un module TV ou d'un climatiseur.

13. Véhicule automobile (1) selon l'une des revendications 7 à 12, **caractérisé en ce qu'**il comprend une caméra de recul (26) reliée informatiquement avec l'interface d'entrée d'image (23) ou le système d'infodivertissement (25), le deuxième signal d'image (B2) incluant ou pouvant inclure un signal vidéo qui peut être généré par la caméra de recul (26).
